# EUROPEAN PATENT SPECIFICATION

(11) **EP 4 493 449 B1**
(45) Date of publication and mention of the grant of the patent: **13.08.2025**
(21) Application number: 22714801.2
(22) Date of filing: 14.03.2022
(51) Int. Cl.: B62J 11/19, B62J 45/00, B62J 9/14, B62J 17/02, B62J 25/04, B62K 11/10, B60R 16/02

(54) **STRADDLED VEHICLE**
GRÄTSCHSITZFAHRZEUG
VÉHICULE À SELLE

(43) Date of publication of application: 22.01.2025
(73) Proprietor: Yamaha Hatsudoki Kabushiki Kaisha, Iwata-shi, Shizuoka 438-8501 (JP); Vulog, 06200 Nice (FR)
(72) Inventor: YAMASAKI, Ryosuke, Iwata-shi, Shizuoka 438-8501 (JP); SAITO, Ryo, Iwata-shi, Shizuoka 438-8501 (JP); FUJISHIRO, Masaya, Iwata-shi, Shizuoka 438-8501 (JP); VIMONT, Guillaume, 06200 Nice (FR); BERTRAND, Franck, 06200 Nice (FR)
(74) Representative: Roman, Alexis
(86) International application number: PCT/EP2022/056529
(87) International publication number: WO 2023/174509

(56) References cited:
- EP-A1- 3 539 855
- WO-A1-2020/022377
- CN-A- 111 902 334
- US-A1- 2014 116 794

## Description

### BACKGROUND OF THE INVENTION

### 1.Field of the Invention

The present invention relates to a straddled vehicle.

### 2.Description of Related Arts

Japanese Unexamined Patent Publication No. 2012-066669 discloses a connector supporting structure for vehicle. The connector supporting structure for vehicle supports a connector for connecting a device that is connected to or additionally equipped in a vehicle such as an automobile, a motorcycle, etc. Specifically, a controller is disposed along a front surface of a front wall of an article housing chamber. One end of a harness that serves as a spare wiring is coupled to a main harness that projects from a lower end of the controller. Another end of the harness is coupled to a coupler (connector). If a device that is additionally equipped is disposed inside the article housing chamber, the coupler is inserted into the article housing chamber through a wiring insertion hole formed in a peripheral wall of the article housing chamber and the coupler is connected to the device. Furthermore, other prior art documents, such as CN 111902334 A, EP3539855A1, US2014/116794A1 and WO2020/022377A1, have attempted to optimize the arrangement and integration of electrical components within a straddled vehicle. These documents disclose various configurations to improve space utilization, maintain storage capacity, enhance component accessibility, and reduce wiring complexity. Said CN111902334A discloses a straddled vehicle according to the preamble of claim 1.

The inventor of preferred embodiments of the present invention described and claimed in the present application conducted an extensive study and research regarding a straddled vehicle, such as the one described above, and in doing so, discovered and first recognized new unique challenges and previously unrecognized possibilities for improvements as described in greater detail below.

### SUMMARY OF THE INVENTION

The arrangement of Japanese Unexamined Patent Publication No. 2012-066669 is not high in a degree of freedom with respect to additionally equipping a device.

The present invention provides a straddled vehicle with which it is possible to increase a degree of freedom with respect to additionally equipping a device.

In order to overcome the previously unrecognized and unsolved challenges described above, the present invention provides a straddled vehicle that includes a body frame, a wire harness, and a vehicle controller. The body frame includes a head pipe that supports a steering device. The wire harness includes a main line at least a portion of which is laid along the body frame and a branch line that is branched from the main line. The vehicle controller is connected to the wire harness. The main line includes a first electric line having one end connected to a first connector and another end connected to a second connector and a second electric line having one end connected to a third connector and another end connected to a fourth connector. The branch line includes a branch electric line branched from an intermediate portion of the first electric line and having a terminal connected to the vehicle controller. The fourth connector is disposed at a position more rearward than the head pipe and the third connector is disposed at a position more forward than the fourth connector.

According to this arrangement, the wire harness includes the main line at least a portion of which is laid along the body frame. The vehicle controller is connected via the branch line to the first electric line that is included in the main line. It is possible to use the second electric line for connection with a device that is additionally equipped. Since the device that is additionally equipped is connectable to the second electric line by the third connector at one end thereof and the fourth connector at the other end thereof, a degree of freedom with respect to additionally equipping a device is high.

The straddled vehicle further includes a storage box that is supported by the body frame and disposed at a position more rearward than the head pipe and an occupant seat that is disposed above the storage box. The fourth connector is disposed below the occupant seat. By this arrangement, it is possible to protect the fourth connector.

Further, the fourth connector is arranged to be connectable to a connector provided in an optional device that is capable of being disposed in the storage box. According to this arrangement, when the optional device is disposed in the storage box, it is possible to connect the fourth connector to the connector of the optional device.

Furthermore, the second connector is arranged to be connectable to a connector provided in the optional device. By this arrangement, it is possible to connect the second connector to the connector of the optional device.

In a preferred embodiment, the fourth connector is disposed in the storage box. By this arrangement, it is possible to protect the fourth connector.

In a preferred embodiment, the fourth connector is disposed adjacent to the storage box. By this arrangement, it is possible to protect the fourth connector.

In a preferred embodiment, the second electric line is electrically open when the optional device is not included in the straddled vehicle. According to this arrangement, connection of the optional device is facilitated by using the second electric line that is electrically open.

In a preferred embodiment, the straddled vehicle further includes a footboard that is supported by the body frame. A portion of the main line is disposed lower than an upper surface of the footboard as seen in a vehicle side view. According to this arrangement, it is possible to protect the portion of the main line by the footboard.

In a preferred embodiment, the footboard includes a pair of right and left footrests and a center tunnel that is provided between the pair of footrests. The center tunnel protrudes higher than the pair of footrests and extends in a vehicle front-rear direction. A portion of the main line is disposed inside the center tunnel. According to this arrangement, it is possible to dispose and protect the portion of the main line inside the center tunnel that is provided in the footboard.

In a preferred embodiment, the straddled vehicle further includes an exterior cover that is supported by the body frame. The exterior cover includes a head pipe storage portion. The head pipe storage portion includes a front cover which is at least in part disposed in front of the head pipe and a back cover which is at least in part disposed in rear of the head pipe. The head pipe storage portion forms an inner space in which the head pipe is accommodated between the front cover and the back cover. The third connector is disposed in the inner space of the head pipe storage portion. According to this arrangement, it is possible to dispose the third connector in the inner space of the head pipe storage portion.

In a preferred embodiment, the third connector includes a terminal that is connected to a relay disposed in the inner space of the head pipe storage portion. According to this arrangement, it is possible to connect the terminal of the third connector to the relay in the inner space of the head pipe storage portion.

In a preferred embodiment, the third connector includes a housing and a plurality of terminals held by the housing. The plurality of terminals are connected to each other inside the housing. According to this arrangement, by connecting the terminals to each other inside the connector, it is possible to reduce the number of components in comparison to a case where the terminals are connected individually to connection objects outside the connector.

In a preferred embodiment, the first connector is arranged to be connectable to a main switch for turning on power. According to this arrangement, it is possible to connect the first connector to the main switch. The vehicle controller is connected to the first electric line via the branch line and it is therefore possible to notify the vehicle controller of conduction/interruption of the main switch.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a left side view of a straddled vehicle according to a preferred embodiment of the present invention.
FIG. 2 is a front view of the straddled vehicle.
FIG. 3 is a rear view of a structure in a periphery of a handle of the straddled vehicle.
FIG. 4 is a plan view of a storage box.
FIG. 5 is a rear view of a head pipe storage portion.
FIG. 6 is an outline right side view of a body frame and a harness.
FIG. 7 is a wiring diagram showing a circuit arrangement of the wire harness.
FIG. 8 is a left side view of the straddled vehicle in a case where optional devices are provided.
FIG. 9 is an outline sectional view of a periphery of the storage box.
FIG. 10 is a schematic sectional view showing a modification example of a configuration of a fourth connector.
FIG. 11 is a wiring diagram showing a circuit arrangement of a wire harness in a modification example.
FIG. 12 is a schematic section view of a footboard in a modification example.

### DETAILED DESCRIPTION OF PREFERRED EMBODIMENTS

A preferred embodiment of the present invention will be hereinafter described in detail with reference to the accompanying drawings.

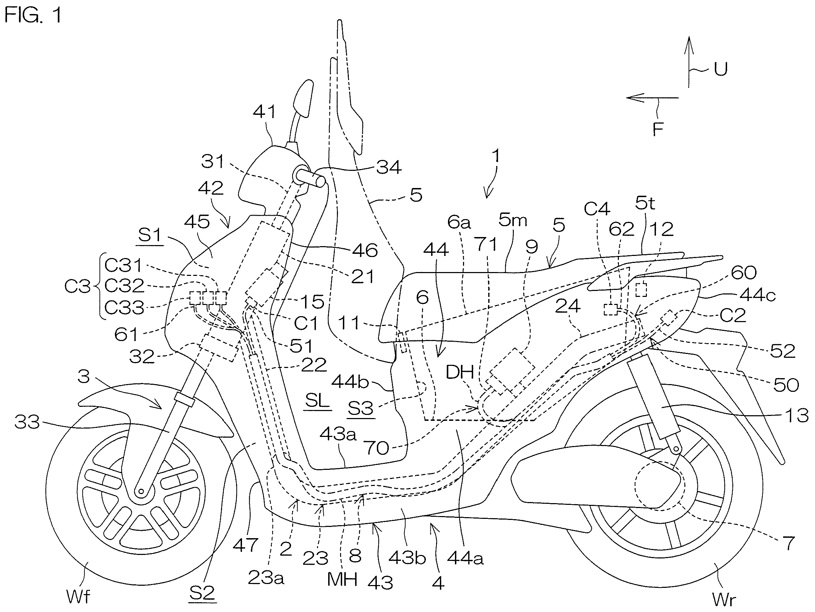

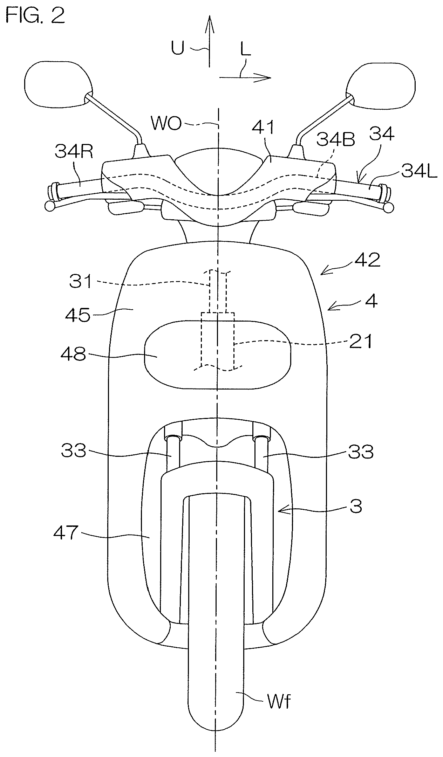

FIG. 1 is a left side view of a straddled vehicle 1 according to a preferred embodiment of the present invention. FIG. 2 is a front view of the straddled vehicle 1.

In the following, unless noted otherwise, the straddled vehicle 1 in a reference orientation of being disposed on a horizontal road surface shall be described. The reference orientation is an orientation in which a pivoting position of a handle 34 is at a straight-traveling position and a rotational axis of a rear wheel Wr is horizontal. The straight-traveling position is the pivoting position of the handle 34 when the straddled vehicle 1 travels straight forward. A front-rear direction, an up-down direction, and a right-left direction are defined on the basis of the straddled vehicle 1 in the reference orientation. The right-left direction corresponds to a vehicle width direction. A vehicle center WO is defined by a vertical plane that passes through a center line of a head pipe 21 and is orthogonal to the rotational axis of the rear wheel Wr.

"U" and "F" in FIG. 1 respectively indicate an up direction and a front direction of the straddled vehicle 1. "L" in FIG. 2 indicates a left direction of the straddled vehicle 1. The same applies to other drawings. A front view, a plan view, and a side view in the following description mean a front view, a plan view, and a side view of the straddled vehicle 1, respectively, unless noted otherwise. Also in the following description, it is deemed that an occupant seat 5 is disposed in a closed position (position of the occupant seat 5 illustrated by solid lines in FIG. 1) unless noted otherwise.

As shown in FIG. 1, the straddled vehicle 1 is, for example, a scooter. The straddled vehicle 1 includes a body frame 2, a steering device 3, an exterior cover 4, the occupant seat 5, a storage box 6, a front wheel Wf, the rear wheel Wr, a power unit 7, a wire harness 8, and a vehicle controller 9 (VCU: vehicle control unit).

The body frame 2 is covered by the exterior cover 4. The body frame 2 includes the head pipe 21, a down frame 22, a pair of lower frames 23, and a pair of rear frames 24. An axis of the head pipe 21 extends obliquely rearward and upward. The down frame 22 extends obliquely rearward and downward from the head pipe 21.

The pair of lower frames 23 extend in the vehicle width direction from the down frame 22. The pair of lower frames 23 overlap mutually in side view. Front end portions 23a of the pair of lower frames 23 are disposed at a lower position than the head pipe 21 and are fixed to the down frame 22.

The pair of rear frames 24 extend obliquely rearward and upward from rear end portions of the pair of lower frames 23. The pair of rear frames 24 overlap mutually in side view. The pair of rear frames 24 are coupled to each other by one or a plurality of cross members (not shown) extending in the vehicle width direction.

The steering device 3 is rotatably supported by the head pipe 21. The steering device 3 supports the front wheel Wf such as to be rotatable around a central axis of the front wheel Wf. The steering device 3 includes a steering shaft 31, an under bracket 32, right and left suspensions 33, and the handle 34. The front wheel Wf is disposed at a lower position than the head pipe 21. The steering shaft 31 is inserted into the head pipe 21. The steering shaft 31 is supported by the head pipe 21 such as to be pivotable to the right and left. An upper portion of the steering shaft 31 is connected to the handle 34.

The under bracket 32 is connected to a lower end of the steering shaft 31. The under bracket 32 is disposed below the head pipe 21. Upper ends of the right and left suspensions 33 are connected to the under bracket 32. The right and left suspensions 33 overlap mutually in side view. The front wheel Wf is supported by the right and left suspensions 33 such as to be rotatable around the central axis of the front wheel Wf.

The exterior cover 4 includes a handle cover 41, a head pipe storage portion 42, a lower cover 43, and a rear cover 44. The handle cover 41 covers the front and rear of the handle 34. The head pipe storage portion 42 is disposed below the handle cover 41. The head pipe storage portion 42 covers a periphery of the head pipe 21 and the down frame 22. The head pipe storage portion 42 is disposed in front and rear of the head pipe 21. The head pipe storage portion 42 is disposed in front and rear of the down frame 22. A lower portion of the head pipe storage portion 42 is connected to the lower cover 43. The head pipe storage portion 42 includes a front cover 45, a back cover 46, and a mud cover 47.

The front cover 45 is disposed below the handle cover 41 in a vehicle up-down direction. At least a portion of the front cover 45 is disposed in front of the head pipe 21. The mud cover 47 is disposed in rear of the front wheel Wf. The mud cover 47 is disposed in front of the down frame 22. Although not illustrated, at least a portion of the mud cover 47 overlaps with the down frame 22 in front view.

The back cover 46 is disposed in rear of the front cover 45. At least a portion of the back cover 46 is disposed in rear of the head pipe 21. An inner space S1 in which the head pipe 21 is accommodated is formed between the front cover 45 and the back cover 46. An inner space S2 that houses the down frame 22 is formed between the mud cover 47 and the back cover 46.

The lower cover 43 is disposed between the head pipe storage portion 42 and the rear cover 44. The lower cover 43 covers a periphery of the lower frames 23. The lower cover 43 includes a footboard 43a and a pair of lower side covers 43b. The footboard 43a is disposed above the pair of lower frames 23. The pair of lower side covers 43b are respectively disposed to the right and left of the pair of lower frames 23. The pair of lower side covers 43b overlap mutually in side view.

A portion or an entirety of the footboard 43a is disposed lower and more forward than the occupant seat 5. The footboard 43a is provided such that a driver (rider) places his/her feet thereon. An upper surface of the footboard 43a has a flat shape across the vehicle width direction. However, the footboard 43a does not have to be of flat shape. For example, a center tunnel that has an upwardly projecting shape and extends in a vehicle front-rear direction may be provided at a center in the vehicle width direction of the footboard 43a.

The rear cover 44 includes a pair of rear side covers 44a, a middle center cover 44b, and a rear center cover 44c. The pair of rear side covers 44a are respectively disposed to the right and left of the pair of rear frames 24. The pair of rear side covers 44a overlap mutually in side view. The rear side covers 44a are disposed below the occupant seat 5 in side view.

The pair of rear side covers 44a are respectively disposed to the right and left of the storage box 6. The rear side covers 44a are overlapped with the storage box 6 in side view. The rear frame 24 is disposed between the storage box 6 and the rear side covers 44a in the vehicle width direction. The rear side covers 44a are also overlapped with the rear frame 24 in side view. The rear side covers 44a are disposed outward of the rear frame 24 in the vehicle width direction.

The middle center cover 44b extends upward from a rear edge of the footboard 43a and is disposed between front edges of the pair of rear side covers 44a. The middle center cover 44b is disposed in rear of the back cover 46. Between the back cover 46 and the middle center cover 44b in the front-rear direction, the exterior cover 4 forms a leg space SL in which the feet and legs of the driver seated on the occupant seat 5 are disposed. The rear center cover 44c is disposed between rear edges of the pair of rear side covers 44a.

The occupant seat 5 is a straddle type seat on which the driver sits. FIG. 1 shows an example where the occupant seat 5 is provided with a main seat 5m on which the driver sits and a tandem seat 5t on which a passenger sits. The occupant seat 5 may be that for a single occupant instead. The occupant seat 5 is disposed in rear of the head pipe 21. The occupant seat 5 is disposed in rear of the back cover 46. The occupant seat 5 is disposed above the pair of rear frames 24 and although not illustrated, overlaps with the pair of rear frames 24 in plan view. The occupant seat 5 may be directly supported by the body frame 2 or may be indirectly supported by the body frame 2.

The storage box 6 forms a housing space S3 that houses an article such a helmet, etc. The storage box 6 is disposed below the occupant seat 5. The occupant seat 5 is coupled to the storage box 6 via a hinge 11. FIG. 1 shows an example where a front end portion of the occupant seat 5 is coupled to the storage box 6 via the hinge 11. The occupant seat 5 is pivotable up and down with respect to the storage box 6. An opening 6a provided at an upper end portion of the storage box 6 (corresponding to an upper end of the housing space S3) is opened and closed by the occupant seat 5.

The occupant seat 5 is pivotable up and down between an open position (position indicated by alternate long and two short dashed lines in FIG. 1) at which the opening 6a of the storage box 6 is open and a closed position (position indicated by solid lines in FIG. 1) at which the opening 6a of the storage box 6 is closed by the occupant seat 5. The straddled vehicle 1 includes a seat lock apparatus 12 that locks the occupant seat 5 at the closed position.

The power unit 7 is disposed below the occupant seat 5. The power unit 7 rotates the rear wheel Wr that corresponds to a driving wheel. The power unit 7 may be an in-wheel motor that is disposed inside the rear wheel Wr. The in-wheel motor is an electric motor that receives a supply of electric power from an unillustrated battery to rotationally drive the rear wheel Wr and may be constituted of an electric motor with a speed reducing mechanism incorporated therein. Also, although not illustrated, the power unit 7 may include and be arranged with a driving source that includes at least one of either of an electric motor and an engine and a transmission that transmits a motive power of the driving source to the rear wheel Wr.

The rear wheel Wr is swingably supported by the body frame 2 via a rear suspension 13.

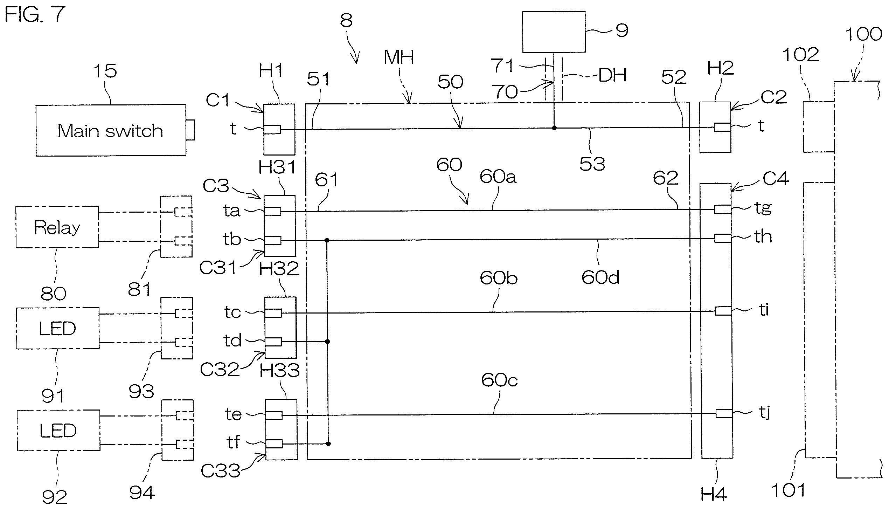

The wire harness 8 includes a main line MH at least a portion of which is laid along the body frame 2, a branch line DH that is branched from the main line MH, a first connector C1, a second connector C2, a third connector C3, and a fourth connector C4. The main line MH includes a first electric line 50 and a second electric line 60. The first electric line 50 has one end 51 to which the first connector C1 is connected, another end 52 to which the second connector C2 is connected and an intermediate portion 53 (see FIG. 7) between the one end 51 and the other end 52. The second electric line 60 has one end 61 to which the third connector C3 is connected and another end 62 to which the fourth connector C4 is connected.

The branch line DH includes a branch electric line 70 that is branched from the intermediate portion 53 (see FIG. 7) of the first electric line 50. The vehicle controller 9 is connected to a terminal 71 of the branch electric line 70.

The first connector C1 is disposed in the head pipe storage portion 42. The first connector C1 is arranged to be connectable to a main switch 15. The first connector C1 is connectable to a connector provided in the main switch 15. The third connector C3 is disposed in the head pipe storage portion 42. The third connector C3 is disposed in proximity to the first connector C1. The third connector C3 includes a plurality of third connectors C31, C32, and C33.

The fourth connector C4 is disposed at a position more rearward than the head pipe 21. The third connector C3 is disposed at a position more forward than the fourth connector C4. The fourth connector C4 is disposed below the occupant seat 5. Although not illustrated, the occupant seat 5 and the fourth connector C4 overlap mutually in plan view. In FIG. 1, the fourth connector C4 is disposed in the storage box 6. The fourth connector C4 may be disposed adjacent to the storage box 6 instead. The second connector C2 is disposed in proximity to the fourth connector C4.

As shown in FIG. 2, the head pipe storage portion 42 overlaps with the head pipe 21 in front view. The front cover 45 overlaps with the head pipe 21 in front view. A headlight 48 is disposed on the front cover 45. The headlight 48 is disposed in front of the head pipe 21. The headlight 48 overlaps with the head pipe 21 in front view. The headlight 48 constitutes a portion of the head pipe storage portion 42. The headlight 48 does not have to be disposed at the head pipe storage portion 42 and may be disposed, for example, on the handle cover 41 instead. The mud cover 47 overlaps with the front wheel Wf in front view.

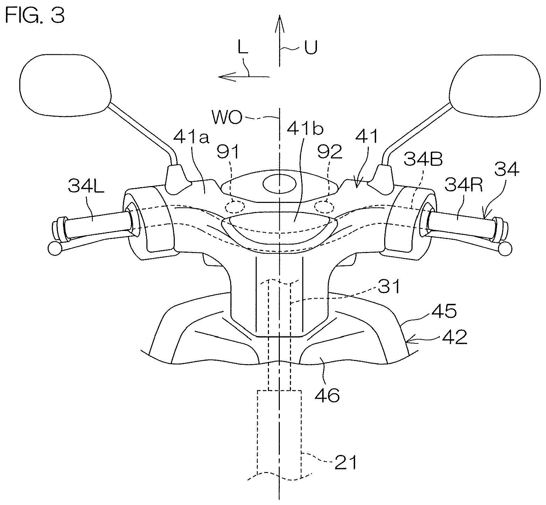

FIG. 3 is a rear view of a structure in a periphery of the handle of the straddled vehicle. As shown in FIG. 3, a meter panel 41b that includes a speedometer, etc., is mounted on an upper surface 41a of the handle cover 41. Also, a pair of right and left LEDs 91 and 92 are mounted as optional devices in some cases on the upper surface 41a of the handle cover 41. The right and left LEDs 92 and 91 are disposed in proximity to the meter panel 41b. The right and left LEDs 92 and 91 are disposed, for example, at symmetrical positions with respect to the vehicle center WO.

The handle 34 includes a pair of right and left grips 34R and 34L and a handle bar 34B. The right and left grips 34R and 34L are mounted on respective ends of the handle bar 34B. The left grip 34L is disposed at the left of the handle cover 41. The right grip 34R is disposed at the right of the handle cover 41.

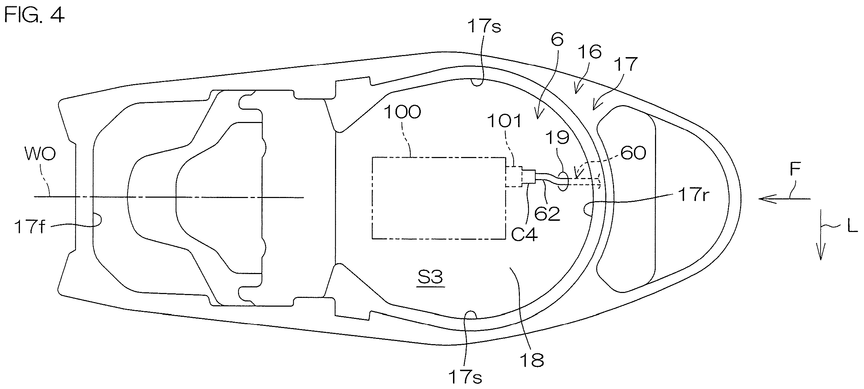

FIG. 4 is a plan view of the storage box 6. As shown in FIG. 4, the storage box 6 includes a main body 16 that forms the housing space S3 for housing an article. The main body 16 includes a cylindrical portion 17 that surrounds the housing space S3 and a bottom portion 18 that is disposed below the housing space S3. The cylindrical portion 17 extends upward from an outer edge of the bottom portion 18. A bottom of the cylindrical portion 17 is closed by the bottom portion 18.

The cylindrical portion 17 includes a front wall 17f, a rear wall 17r, and a pair of side walls 17s. A peripheral wall of the cylindrical portion 17 is arranged by the front wall 17f, the rear wall 17r, and the pair of side walls 17s. The front wall 17f is disposed in front of the housing space S3. The rear wall 17r is disposed in rear of the housing space S3. The front wall 17f and the rear wall 17r face each other across an interval in the front-rear direction. The pair of side walls 17s are respectively disposed to the right and left of the housing space S3. The pair of side walls 17s face each other across an interval in the front-rear direction.

If the fourth connector C4 is disposed in the storage box 6, an insertion hole 19 through which the fourth connector C4 and the second electric line 60 are insertable is formed in the peripheral wall of the cylindrical portion 17 or in the bottom portion 18. It is possible to dispose an optional device 100 that is additionally equipped in the storage box 6. If the optional device 100 is disposed in the storage box 6, the fourth connector C4 is connected to a connector 101 provided in the optional device 100. The fourth connector C4 may be connected from the rear or connected from the front to the optional device 100.

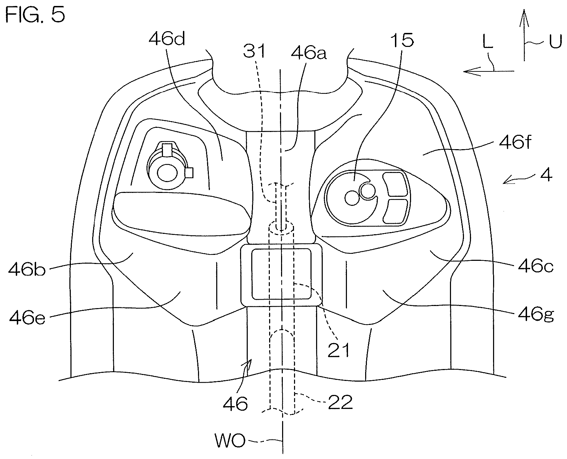

FIG. 5 is a rear view of the head pipe storage portion 42. As shown in FIG. 5, at least a portion of the back cover 46 overlaps with the head pipe 21 in front view. The back cover 46 includes a central portion 46a, a left side portion 46b, and a right side portion 46c. The central portion 46a overlaps with the head pipe 21 in rear view. The left side portion 46b is positioned at a left side of the central portion 46a. The right side portion 46c is positioned at a right side of the central position 46a. The back cover 46 is provided with the main switch 15.

The left side portion 46b includes an upper left portion 46d and a lower left portion 46e. The upper left portion 46d has a shape that is recessed toward the front (the rear of the paper surface in FIG. 5) from the lower left portion 46e. The right side portion 46c includes an upper right portion 46f and a lower right portion 46g. The upper right portion 46f has a shape that is recessed toward the front (the rear of the paper surface in FIG. 5) from the lower right portion 46g. The main switch 15 is provided at the upper right portion 46f. The main switch 15 may be provided at the upper left portion 46d instead.

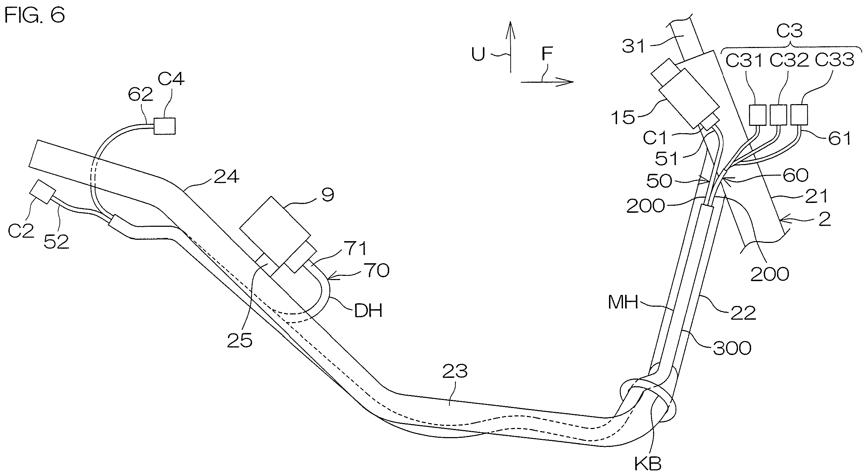

FIG. 6 is an outline right side view of the body frame 2 and the wire harness 8.

Although not illustrated, at least a portion of the main line MH of the wire harness 8 is fixed such as to be laid along the body frame 2 by using one or a plurality of cable ties KB and unillustrated grommets. The vehicle controller 9 is fixed to the rear frame 24 via a stay 25 that is fixed to the rear frame 24. A main body of the main switch 15 is fixed to the head pipe 21 via an unillustrated stay.

The first electric line 50 and the second electric line 60 (the respective electric lines 60a to 60d to be described below) each include a core wire and an insulating coating that covers the core wire. The core wire is formed of a conductive material such as copper or aluminum, etc. The core wire may be formed of a single element wire or may be formed of a plurality of element wires. Peripheries of the first electric line 50 and the second electric line 60 may be covered by an outer sheath 200 or may be covered by a cladding 300 such as a corrugated tube or a spirally-wound adhesive tape, etc.

FIG. 7 is a wiring diagram showing a circuit arrangement of the wire harness 8. In FIG. 7, the first electric line 50 and the respective electric lines 60a to 60d of the second electric line 60 are shown schematically as core wires.

The first connector C1 connected to the one end 51 of the first electric line 50 includes a housing H1 with an insulating property and a terminal t with a conductive property that is held by the housing H1. The first connector C1 is connectable to the connector (not shown) provided in the main switch 15. The second connector C2 connected to the other end 52 of the first electric line 50 includes a housing H2 with an insulating property and a terminal t with a conductive property that is held by the housing H2. If the optional device 100 is disposed in the storage box 6, the second connector C2 is arranged to be connectable to a connector 102 provided in the optional device 100. In a not claimed example, the second connector C2 may instead be connected to a device other than the optional device.

The second electric line 60 is constituted of an electric line bundle that includes the four electric lines 60a, 60b, 60c, and 60d. The third connector C31 includes a housing H31 with an insulating property and two terminals ta and tb with a conductive property that are held by the housing H31. The third connector C32 includes a housing H32 with an insulating property and two terminals tc and td with a conductive property that are held by the housing H32. The third connector C33 includes a housing H33 with an insulating property and two terminals te and tf with a conductive property that are held by the housing H33.

The fourth connector C4 includes a housing H4 with an insulating property and four terminals tg, th, ti, and tj with a conductive property. If the optional device 100 is disposed in the storage box 6, the fourth connector C4 is arranged to be connectable to the connector 101 provided in the optional device 100. The optional device 100 may include, for example, an onboard communication apparatus. If the optional device 100 is not provided, the second electric line 60 is electrically open. The second electric line 60, the third connector C3, and the fourth connector C4 are preferably designed to satisfy required specifications for additional equipping of the optional device 100 in preparation of additional equipping of the optional device 100.

One end of the electric line 60a is connected to one terminal ta of the third connector C31 and another end of the electric line 60a is connected to the terminal tg of the fourth connector C4. One end of the electric line 60b is connected to one terminal to of the third connector C32 and another end of the electric line 60b is connected to the terminal ti of the fourth connector C4. One end of the electric line 60c is connected to one terminal te of the third connector C33 and another end of the electric line 60c is connected to the terminal tj of the fourth connector C4.

One end of the electric line 60d is connected to the other terminal tb of the third connector C31 and is also connected to the other terminal td of the third connector C32 and the other terminal tf of the third connector C33 via a connection line. That is, the one end of the electric line 60d is connected in common to the other terminal tb of the third connector C31, the other terminal td of the third connector C32, and the other terminal tf of the third connector C33. The other end of the electric line 60d is connected to the terminal th of the fourth connector C4. By common connection of the other terminals tb, td, and tf of the third connectors C31, C32, and C33, it is possible to reduce the number of electric lines and simplify the electric line structure.

The third connector C32 is arranged to be connectable to a connector 93 provided in the LED 91 as an optional device. The third connector C33 is arranged to be connectable to a connector 94 provided in the LED 92 as an optional device. The third connector C31 is arranged to be connectable to a connector 81 provided in a relay 80 as an optional device that is substitutable with the main switch 15. Although not illustrated, the relay 80 includes a contact portion and a relay coil.

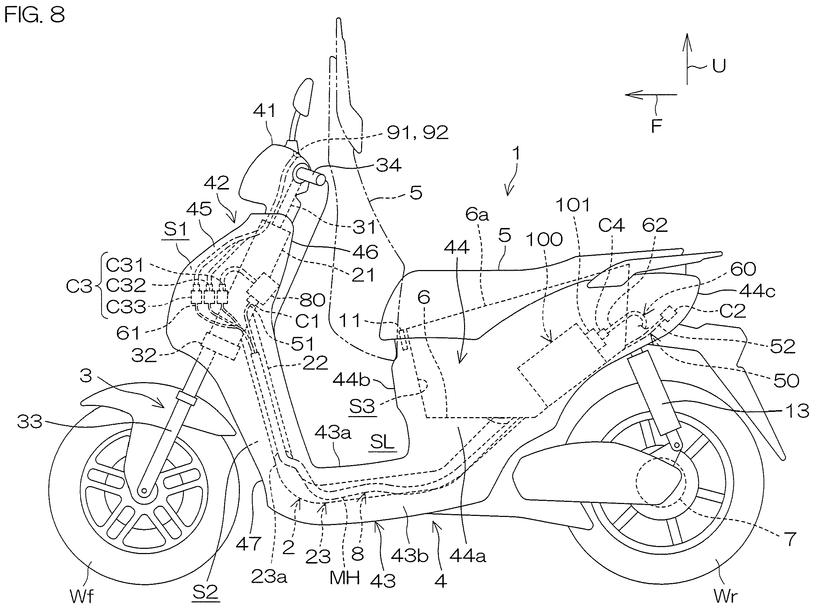

FIG. 8 is a left side view of the straddled vehicle in a case where the optional devices are provided. The relay 80 as an optional device that is connected to the third connector C31 is disposed in the head pipe storage portion 42. The third connector C32 and the third connector C33 are disposed in the head pipe storage portion 42. The third connector C32 and the third connector C33 are connected inside the head pipe storage portion 42 to the connectors 93 and 94 connected to the LEDs 91 and 92 as optional devices.

The fourth connector C4 is connected to the connector 101 provided in the optional device 100 that is housed in the storage box 6. In this case, the second connector C2 is also connected inside the storage box 6 to a connector provided in the optional device 100.

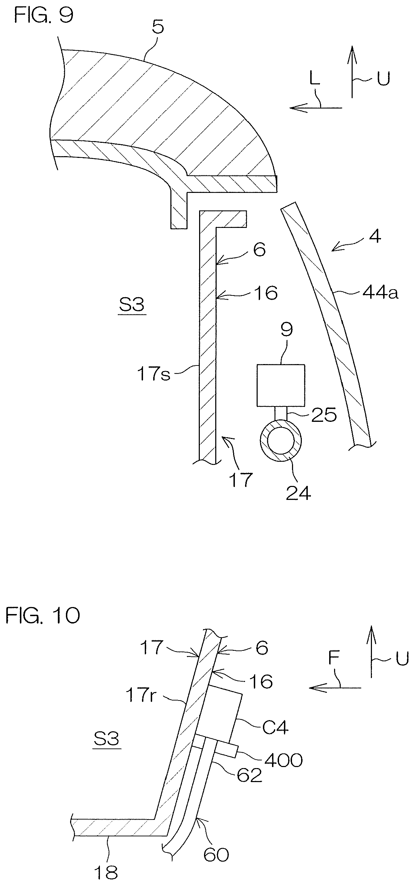

FIG. 9 is an outline sectional view of a periphery of the storage box 6. For example, at least a portion of the rear frame 24 at the right side is disposed between the side wall 17s at the right side of the cylindrical portion 17 of the storage box 6 and the rear side cover 44a at the right side. The vehicle controller 9 is mounted on the rear frame 24 at the right side via the stay 25. The vehicle controller 9 is disposed between the side wall 17s at the right side of the cylindrical portion 17 of the storage box 6 and the rear side cover 44a at the right side.

According to the present preferred embodiment, the following actions and effects are exhibited. That is, as shown in FIG. 1, the wire harness 8 includes the main line MH at least a portion of which is laid along the body frame 2. The vehicle controller 9 is connected via the branch electric line 70 to the first electric line 50 that is included in the main line MH. On the other hand, it is possible to use the second electric line 60 for connection with a device that is additionally equipped. Since the device that is additionally equipped is connectable to the second electrical line 60 by the third connector C3 at the one end 61 thereof and the fourth connector C4 at the other end 62 thereof, a degree of freedom with respect to additionally equipping a device is high.

Also, the fourth connector C4 is disposed below the occupant seat 5 that is disposed above the storage box 6. It is thus possible to protect the fourth connector C4.

Also, the fourth connector C4 is disposed in the storage box 6. It is thus possible to protect the fourth connector C4. Also, even when the fourth connector C4 is disposed adjacent to the storage box 6 as shown in FIG. 10, it is possible to protect the fourth connector C4.

When the optional device 100 is not disposed in the storage box 6, the fourth connector C4 is preferably held directly or indirectly by the main body 16 of the storage box 6. For example, when the fourth connector C4 is disposed adjacent to the storage box 6 as shown in FIG. 10, the fourth connector C4 may be held by a holder 400 that is fixed to the main body 16 of the storage box 6. Although not illustrated, the same applies even when the fourth connector C4 is disposed in the storage box 6. A holder may be formed by a cover (not shown) that holds the fourth connector C4 in its interior.

Also, as shown in FIG. 8, the fourth connector C4 is arranged to be connectable to the connector 101 provided in the optional device 100 that is capable of being disposed in the storage box 6. According to this arrangement, when the optional device 100 is disposed in the storage box 6, it is possible to connect the fourth connector C4 to the connector 101 of the optional device 100.

Also, as shown in FIG. 7, the second connector C2 is arranged to be connectable to the connector 102 provided in the optional device 100. By this arrangement, it is possible to connect the second connector C2 to the connector 102 of the optional device 100.

Also, when the optional device 100 is not included n the straddled vehicle 1, the second electric line 60 is electrically open. According to this arrangement, connection of the optional device 100 is facilitated by using the second electric line 60 that is electrically open. More preferably, the second electric line 60 is designed and disposed such as to satisfy the required specifications when the optional device 100 is additionally equipped as mentioned above. It is thereby possible to connect the optional device 100 even more easily.

Also, as shown in FIG. 1, the footboard 43a that is supported by the body frame 2 is included. As seen in a vehicle side view, a portion of the main line MH is disposed lower than the upper surface of the footboard 43a. According to this arrangement, it is possible to protect the portion of the main line MH by the footboard 43a.

Also, the exterior cover 4 that is supported by the body frame 2 is included. The exterior cover 4 includes the head pipe storage portion 42. The head pipe storage portion 42 includes the front cover 45 at least a portion of which is disposed in front of the head pipe 21 and the back cover 46 at least a portion of which is disposed in rear of the head pipe 21. The head pipe storage portion 42 forms the inner space S1 that houses the head pipe 21 between the front cover 45 and the back cover 46. The third connector C3 is disposed in the inner space S1 of the head pipe storage portion 42. According to this arrangement, it is possible to dispose the third connector C3 in the inner space S1 of the head pipe storage portion 42. It is thereby possible to protect the third connector C3.

Also, as shown in FIG. 7, the first connector C1 is arranged to be connectable to the main switch 15 for turning on power. According to this arrangement, it is possible to connect the first connector C1 to the main switch 15. The vehicle controller 9 is connected to the first electric line 50 via the branch electric line 70 and it is therefore possible to notify the vehicle controller 9 of conduction/interruption of the main switch 15.

Also, as shown in FIG. 8, the third connector C31 includes the terminals ta and tb that are connectable to the relay 80 that is disposed in some cases in the head pipe storage portion 42. It is therefore possible to connect the third connector C31 to the relay 80 inside the head pipe storage portion 42. Also, if the relay 80 is disposed in place of the main switch 15, on/off operation of power supply from the optional device 100 that is connected to the fourth connector C4 is enabled.

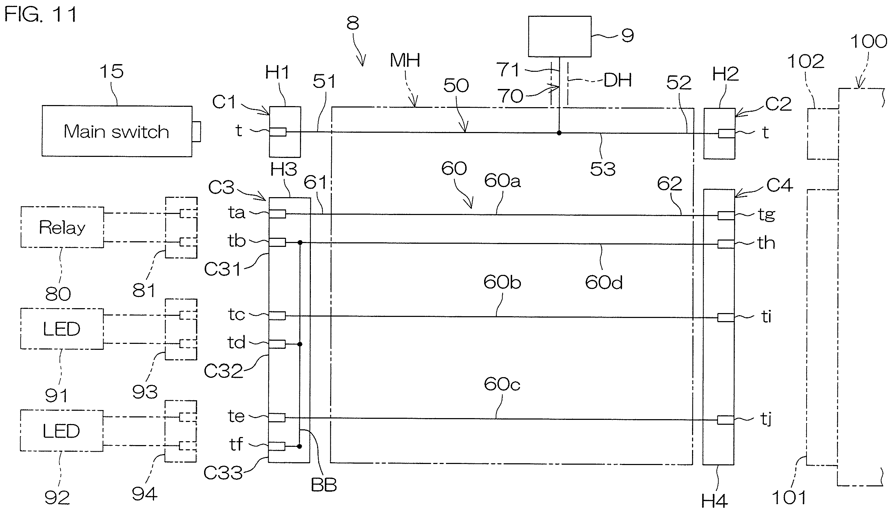

FIG. 11 is a wiring diagram showing a circuit arrangement of the wire harness 8 in a modification example. The modification example of FIG. 11 mainly differs from the example of FIG. 7 as follows. The third connector C3 includes a single housing H3 with an insulating property and six terminals ta, tb, tc, td, te, and tf with a conductive property that are held by the housing H3. Also, the third connector C3 includes a busbar BB with a conductive property that connects the three terminals tb, td, and tf inside the housing H3. By connecting the terminals tb, td, and tf inside the housing H3 of the third connector C3, it is possible to reduce the number of components in comparison to a case where the terminals are connected individually to connection objects outside the connector.

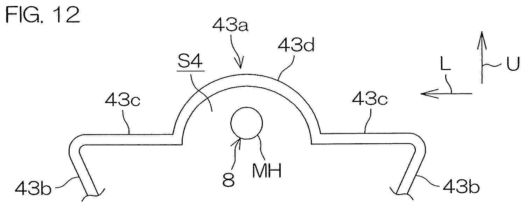

FIG. 12 is an outline section view of a footboard in a modification example. The footboard 43a includes a pair of right and left footrests 43c and a center tunnel 43d that is provided between the right and left footrests 43c. The center tunnel 43d projects higher than the right and left footrests 43c and extends in the front-rear direction (direction orthogonal to the paper surface). A portion of the main line MH of the wire harness 8 is disposed in an interior (inner space S4) of the center tunnel 43d. According to this arrangement, it is possible to dispose and protect the portion of the main line MH in the interior of the center tunnel 43d that is provided in the footboard 43a.

The present invention is not restricted to the preferred embodiment described above and, for example, the wire harness 8 may be that which constitutes a portion of a wire harness of a larger unit. While preferred embodiments of the present invention have been described above, it is to be understood that variations and modifications will be apparent to those skilled in the art without departing from the scope of the present invention defined by the following claims. The scope of the present invention, therefore, is to be determined solely by the following claims.

### REFERENCE SIGNS LIST

1: straddled vehicle, 2: body frame, 3: steering device, 4: exterior cover, 5: occupant seat, 6: storage box, 8: wire harness, 9: vehicle controller, 15: main switch, 21: head pipe, 42: head pipe storage portion, 43a: footboard, 43c: footrest, 43d: center tunnel, 45: front cover, 46: back cover, 50: first electric line, 51: one end, 52: other end, 53: intermediate portion, 60: second electric line, 61: one end, 62: other end, 70: branch electric line, 71: terminal, 80: relay (optional device), 91: LED (optional device), 92: LED (optional device), 100: optional device, 101: connector, 102: connector, C1: first connector, C2: second connector, C3: third connector, C31: third connector, C32: third connector, C33: third connector, C4: fourth connector, DH: branch line, H3: housing, MH: main line, S1: inner space, S3: inner space, S4: inner space, t: terminal, ta to tj: terminals

## Claims

1. A straddled vehicle comprising:
a body frame (2) that includes a head pipe (21) supporting a steering device (3);
a wire harness (8) that includes a main line (MH) at least a portion of which is laid along the body frame (2) and a branch line (DH) branched from the main line (MH);
a vehicle controller (9) that is connected to the wire harness (8);
a storage box (6) that is supported by the body frame (2) and disposed at a position more rearward than the head pipe (21); and
an occupant seat (5) that is disposed above the storage box (6);
the main line (MH) including a first electric line (50) having one end (51) connected to a first connector (C1) and another end (52) connected to a second connector (C2) and a second electric line (60) having one end (61) connected to a third connector (C3) and another end (62) connected to a fourth connector (C4),
the branch line (DH) including a branch electric line (70) branched from an intermediate portion of the first electric line (50) and having a terminal (71) connected to the vehicle controller (9), and
the fourth connector (C4) being disposed at a position more rearward than the head pipe (21) and the third connector (C3) being disposed at a position more forward than the fourth connector (C4),
wherein
the fourth connector (C4) is disposed below the occupant seat (5) and is arranged to be connectable to a connector (101) provided in an optional device (100) that is capable of being disposed in the storage box (6),
**characterized in that**
the second connector (C2) is arranged to be connectable to a connector (102) provided in the optional device (100).

2. The straddled vehicle according to Claim 1, wherein the fourth connector (C4) is disposed in the storage box (6).

3. The straddled vehicle according to Claim 1, wherein the fourth connector (C4) is disposed adjacent to the storage box (6).

4. The straddled vehicle according to any one of Claims 1 to 3, wherein the second electric line (60) is electrically open when the optional device (100) is not provided in the straddled vehicle.

5. The straddled vehicle according to any one of Claims 1 to 4, further comprising:
a footboard (43a) that is supported by the body frame (2); and
wherein, a portion of the main line (MH) is disposed lower than an upper surface of the footboard (43a) as seen in a vehicle side view.

6. The straddled vehicle according to Claim 5, wherein the footboard (43a) includes a pair of right and left footrests (43c) and a center tunnel (43d) that is provided between the pair of footrests (43c), the center tunnel (43d) protrudes higher than the pair of footrests (43c) and extends in a vehicle front-rear direction, and the main line (MH) is in part disposed inside the center tunnel (43d).

7. The straddled vehicle according to any one of Claims 1 to 6, further comprising:
an exterior cover (4) that is supported by the body frame (2); and
wherein the exterior cover (4) includes a head pipe storage portion (42) including a front cover (45) which is at least in part disposed in front of the head pipe (21) and a back cover (46) which is at least in part disposed in rear of the head pipe (21),
the head pipe storage portion (42) forms an inner space (S1) in which the head pipe (21) is accommodated between the front cover (45) and the back cover (46), and
the third connector (C3) is disposed in the inner space (S1) of the head pipe storage portion (42).

8. The straddled vehicle according to Claim 7, wherein the third connector (C3) includes a connector (C31) including a terminal that is connected to a relay (80) disposed in the inner space (S1) of the head pipe storage portion (42).

9. The straddled vehicle according to any one of Claims 1 to 8, wherein the third connector (C3) includes a connector (C31) including a housing (H31) and a plurality of terminals (ta, tb) held by the housing (H31) and
the plurality of terminals (ta, tb) are connected to each other inside the housing (H31).

10. The straddled vehicle according to any one of Claims 1 to 9, wherein the first connector (C1) is arranged to be connectable to a main switch (15) for turning on power.

## Patentansprüche

1. Grätschsitzfahrzeug, das Folgendes umfasst:
einen Karosserierahmen (2), der ein Kopfrohr (21) beinhaltet, das eine Lenkvorrichtung (3) trägt;
einen Kabelbaum (8), der eine Hauptleitung (MH), von der mindestens ein Abschnitt entlang des Karosserierahmens (2) verlegt ist, und eine von der Hauptleitung (MH) abgezweigte Abzweigleitung (DH) beinhaltet;
eine Fahrzeugsteuerung (9), die mit dem Kabelbaum (8) verbunden ist;
eine Aufbewahrungsbox (6), die vom Karosserierahmen (2) getragen wird und an einer Position hinter dem Kopfrohr (21) angeordnet ist; und
einen Insassensitz (5), der oberhalb der Aufbewahrungsbox (6) angeordnet ist;
wobei die Hauptleitung (MH) eine erste elektrische Leitung (50), die ein Ende (51) aufweist, das mit einem ersten Steckverbinder (C1) verbunden ist, und ein anderes Ende (52), das mit einem zweiten Steckverbinder (C2) verbunden ist, und eine zweite elektrische Leitung (60) umfasst, die ein Ende (61) aufweist, das mit einem dritten Steckverbinder (C3) verbunden ist, und ein anderes Ende (62), das mit einem vierten Steckverbinder (C4) verbunden ist,
wobei die Abzweigleitung (DH) eine elektrische Abzweigleitung (70) umfasst, die von einem Zwischenabschnitt der ersten elektrischen Leitung (50) abgezweigt ist und einen Anschluss (71) aufweist, der mit der Fahrzeugsteuerung (9) verbunden ist, und
wobei der vierte Steckverbinder (C4) an einer Position angeordnet ist, die weiter hinten liegt als das Kopfrohr (21), und der dritte Steckverbinder (C3) an einer Position angeordnet ist, die weiter vorne liegt als der vierte Steckverbinder (C4),
wobei
der vierte Steckverbinder (C4) unterhalb des Insassensitzes (5) angeordnet ist und so eingerichtet ist, dass er mit einem in einer optionalen Vorrichtung (100) vorgesehenen Steckverbinder (101) verbunden werden kann, der in der Aufbewahrungsbox (6) angeordnet werden kann,
**dadurch gekennzeichnet, dass**
der zweite Steckverbinder (C2) so eingerichtet ist, dass er mit einem in der optionalen Vorrichtung (100) vorgesehenen Steckverbinder (102) verbunden werden kann.

2. Grätschsitzfahrzeug nach Anspruch 1, wobei der vierte Steckverbinder (C4) in der Aufbewahrungsbox (6) angeordnet ist.

3. Grätschsitzfahrzeug nach Anspruch 1, wobei der vierte Steckverbinder (C4) neben der Aufbewahrungsbox (6) angeordnet ist.

4. Grätschsitzfahrzeug nach einem der Ansprüche 1 bis 3, wobei die zweite elektrische Leitung (60) elektrisch offen ist, wenn die optionale Vorrichtung (100) nicht im Grätschsitzfahrzeug vorgesehen ist.

5. Grätschsitzfahrzeug nach einem der Ansprüche 1 bis 4, das ferner Folgendes umfasst:
ein Trittbrett (43a), das vom Karosserierahmen (2) getragen wird; und
wobei ein Abschnitt der Hauptleitung (MH) niedriger angeordnet ist als eine obere Oberfläche des Trittbretts (43a), wie in einer Fahrzeugseitenansicht zu sehen ist.

6. Grätschsitzfahrzeug nach Anspruch 5, wobei das Trittbrett (43a) ein Paar rechter und linker Fußauflagen (43c) und einen Mitteltunnel (43d) beinhaltet, der zwischen dem Paar Fußauflagen (43c) vorgesehen ist, wobei der Mitteltunnel (43d) höher als das Paar Fußauflagen (43c) vorsteht und sich in einer Front-Heck-Richtung des Fahrzeugs erstreckt, und wobei die Hauptleitung (MH) teilweise innerhalb des Mitteltunnels (43d) angeordnet ist.

7. Grätschsitzfahrzeug nach einem der Ansprüche 1 bis 6, das ferner Folgendes umfasst:
eine äußere Abdeckung (4), die vom Karosserierahmen (2) getragen wird; und
wobei die äußere Abdeckung (4) einen Kopfrohr-Aufbewahrungsabschnitt (42) beinhaltet, der eine vordere Abdeckung (45), die mindestens teilweise vor dem Kopfrohr (21) angeordnet ist, und eine hintere Abdeckung (46) beinhaltet, die mindestens teilweise hinter dem Kopfrohr (21) angeordnet ist,
der Kopfrohr-Aufbewahrungsabschnitt (42) einen Innenraum (S1) bildet, in dem das Kopfrohr (21) zwischen der vorderen Abdeckung (45) und der hinteren Abdeckung (46) untergebracht ist, und
der dritte Steckverbinder (C3) im Innenraum (S1) des Kopfrohr-Aufbewahrungsabschnitts (42) angeordnet ist.

8. Grätschsitzfahrzeug nach Anspruch 7, wobei der dritte Steckverbinder (C3) einen Steckverbinder (C31) beinhaltet, der einen Anschluss beinhaltet, der mit einem Relais (80) verbunden ist, das im Innenraum (S1) des Kopfrohr-Aufbewahrungsabschnitts (42) angeordnet ist.

9. Grätschsitzfahrzeug nach einem der Ansprüche 1 bis 8, wobei der dritte Steckverbinder (C3) einen Steckverbinder (C31) beinhaltet, der ein Gehäuse (H31) und eine Vielzahl von Anschlüssen (ta, tb) beinhaltet, die vom Gehäuse (H31) gehalten werden, und
die Vielzahl von Anschlüssen (ta, tb) innerhalb des Gehäuses (H31) miteinander verbunden sind.

10. Grätschsitzfahrzeug nach einem der Ansprüche 1 bis 9, wobei der erste Steckverbinder (C1) so eingerichtet ist, dass er mit einem Hauptschalter (15) zum Einschalten der Stromversorgung verbunden werden kann.

## Revendications

1. Véhicule à enfourcher comprenant :
un cadre de corps (2) qui comporte un tube de tête (21) supportant un dispositif de direction (3) ;
un faisceau de câbles (8) qui comporte une ligne principale (MH) dont au moins une partie est posée le long du cadre de corps (2) et une ligne de dérivation (DH) ramifiée à partir de la ligne principale (MH) ;
un dispositif de commande de véhicule (9) qui est connecté au faisceau de câbles (8) ;
une boîte de rangement (6) qui est supportée par le cadre de corps (2) et disposée à une position plus vers l'arrière que le tube de tête (21) ; et
un siège d'occupant (5) qui est disposé au-dessus de la boîte de rangement (6) ;
la ligne principale (MH) comportant une première ligne électrique (50) ayant une extrémité (51) connectée à un premier connecteur (C1) et une autre extrémité (52) connectée à un deuxième connecteur (C2) et une deuxième ligne électrique (60) ayant une extrémité (61) connectée à un troisième connecteur (C3) et une autre extrémité (62) connectée à un quatrième connecteur (C4),
la ligne de dérivation (DH) comportant une ligne électrique de dérivation (70) dérivée d'une partie intermédiaire de la première ligne électrique (50) et ayant une borne (71) connectée au dispositif de commande de véhicule (9), et
le quatrième connecteur (C4) étant disposé à une position plus en arrière que le tube de tête (21) et le troisième connecteur (C3) étant disposé à une position plus en avant que le quatrième connecteur (C4),
dans lequel
le quatrième connecteur (C4) est disposé sous le siège d'occupant (5) et est agencé pour pouvoir être connecté à un connecteur (101) prévu dans un dispositif optionnel (100) qui est apte à être disposé dans la boîte de rangement (6),
**caractérisé en ce que**
le deuxième connecteur (C2) est agencé pour pouvoir être connecté à un connecteur (102) prévu dans le dispositif optionnel (100).

2. Véhicule à enfourcher selon la revendication 1, dans lequel le quatrième connecteur (C4) est disposé dans la boîte de rangement (6).

3. Véhicule à enfourcher selon la revendication 1, dans lequel le quatrième connecteur (C4) est disposé adjacent à la boîte de rangement (6).

4. Véhicule à enfourcher selon l'une quelconque des revendications 1 à 3, dans lequel la deuxième ligne électrique (60) est électriquement ouverte lorsque le dispositif optionnel (100) n'est pas prévu dans le véhicule à enfourcher.

5. Véhicule à enfourcher selon l'une quelconque des revendications 1 à 4, comprenant en outre :
un marchepied (43a) qui est supporté par le cadre de corps (2) ; et
dans lequel une partie de la ligne principale (MH) est disposée plus bas qu'une surface supérieure du marchepied (43a) tel que vu dans une vue latérale de véhicule.

6. Véhicule à enfourcher selon la revendication 5, dans lequel le marchepied (43a) comporte une paire de repose-pieds (43c) droit et gauche et un tunnel central (43d) qui est prévu entre la paire de repose-pieds (43c), le tunnel central (43d) fait saillie plus haut que la paire de repose-pieds (43c) et s'étend dans une direction avantarrière de véhicule, et la ligne principale (MH) est en partie disposée à l'intérieur du tunnel central (43d).

7. Véhicule à enfourcher selon l'une quelconque des revendications 1 à 6, comprenant en outre :
un capot extérieur (4) qui est supporté par le cadre de corps (2) ; et
dans lequel le couvercle extérieur (4) comporte une partie de stockage de tube de tête (42) comportant un couvercle avant (45) qui est au moins en partie disposé devant le tube de tête (21) et un couvercle arrière (46) qui est au moins en partie disposé à l'arrière du tube de tête (21), la partie de stockage de tube de tête (42) forme un espace intérieur (S1) dans lequel le tube de tête (21) est logé entre le couvercle avant (45) et le couvercle arrière (46), et
le troisième connecteur (C3) est disposé dans l'espace intérieur (S1) de la partie de stockage de tube de tête (42).

8. Véhicule à enfourcher selon la revendication 7, dans lequel le troisième connecteur (C3) comporte un connecteur (C31) comportant une borne qui est connectée à un relais (80) disposé dans l'espace intérieur (S1) de la partie de stockage de tube de tête (42).

9. Véhicule à enfourcher selon l'une quelconque des revendications 1 à 8, dans lequel le troisième connecteur (C3) comporte un connecteur (C31) comportant un boîtier (H31) et une pluralité de bornes (ta, tb) maintenues par le boîtier (H31) et
la pluralité de bornes (ta, tb) sont connectées entre elles à l'intérieur du boîtier (H31).

10. Véhicule à enfourcher selon l'une quelconque des revendications 1 à 9, dans lequel le premier connecteur (C1) est agencé pour pouvoir être connecté à un interrupteur principal (15) pour la mise sous tension.
